# EUROPEAN PATENT SPECIFICATION

(11) **EP 3 694 811 B1**
(45) Date of publication and mention of the grant of the patent: **03.04.2024**
(21) Application number: 18780133.7
(22) Date of filing: 05.10.2018
(51) Int. Cl.: C08F 4/6392, C08F 4/02, C08F 110/02

(54) **SUPPORTED CATALYST SYSTEM**
UNTERSTÜTZTES KATALYSATORSYSTEM
SYSTÈME DE CATALYSEUR SUPPORTÉ

(30) Priority: 11.10.2017 EP 17195969
(43) Date of publication of application: 19.08.2020
(73) Proprietor: Basell Polyolefine GmbH, 50389 Wesseling (DE); Albert-Ludwigs-Universität Freiburg, 79098 Freiburg (DE)
(72) Inventor: MIHAN, Shahram, 65812 Bad Soden (DE); GREGORIUS, Heike, 56075 Koblenz (DE); FRAAIJE, Volker, 60385 Frankfurt am Main (DE); MÜLHAUPT, Rolf, 79117 Freiburg (DE); ZHONG, Fan, 79110 Freiburg (DE)
(74) Representative: LyondellBasell
(86) International application number: PCT/EP2018/077075
(87) International publication number: WO 2019/072695

(56) References cited:
- GB-A- 2 099 000
- JP-A- H09 324 008
- US-A1- 2014 256 878
- US-A1- 2017 210 863
- DATABASE WPI Week 198718 Thomson Scientific, London, GB; AN 1987-126316 XP002788260, -& JP S62 68803 A (TOHO TITANIUM CO LTD) 28 March 1987 (1987-03-28)

## Description

### FIELD OF THE INVENTION

The present disclosure relates to a supported catalyst system comprising a modified gibbsite as support and a single site catalyst component.

### BACKGROUND OF THE INVENTION

Gibbsite, in particular nano platelet gibbsite are known in the art. Gibbsite nano platelet (γ-A1(OPH)₃) is synthesized from Al(NO₃)₃·9H₂O as precursor after hydrothermal crystallization.

The applicant found that when the Gibbsite nano platelet is treated with compound of formula (OR^{a})₃Si-R^{b} or of formula R^{c}-COOH wherein R^{a} is a C₁-C₁₀ alkyl radical; R^{b} is a C₅-C₃₀ alkyl radical and R^{c} is a C₅-C₃₀ hydrocarbon radical it is possible to obtain a carrier to be used as support for single site catalyst system having high polymerization activity. The documents JP H09 324008 and JP S62 68803 belong to the prior art.

### SUMMARY OF THE INVENTION

An object of the present disclosure is a nano platelet gibbsite treated with compound of formula (OR^{a})₃Si-R^{b} or of formula R^{c}-COOH wherein R^{a} equal to or different from each other is a C₁-C₁₀ alkyl radical; R^{b} is a C₅-C₃₀ hydrocarbon radical and R^{c} is a C₅-C₃₀ hydrocarbon radical.

An object of the present invention is a supported catalyst system comprising:
A) at least one organometallic coordination compound consisting of a metal bonded to one or two cyclopentadienyl rings that can be substituted;
B) a nano platelet gibbsite treated with compound of formula (OR^{a})₃Si-R^{b} or of formula R^{c}-COOH wherein R^{a} equal to or different from each other is a C₁-C₁₀ alkyl radical; R^{b} is a C₅-C₃₀ hydrocarbon radical and R^{c} is a C₅-C₃₀ hydrocarbon radical; and
C) a cocatalyst.

### DETAILED DESCRIPTION OF THE INVENTION

Gibbsite nano platelet (γ-A1(OPH)₃) can be synthesized from Al(NO₃)₃·9H₂O as precursor after hydrothermal crystallization.

Gibbsite can be characterized with different methods. The morphology of gibbsite is characterized with SEM and TEM. Gibbsite shows pseudo hexagonal structure with a length around 700 nm, thickness around 30 nm. The thermal gravity analysis on gibbsite indicates that gibbsite shows a thermal stability until 260 °C and decomposes at temperatures higher than 260 °C with loss of water. The residual mass of gibbsite at 650 °C s 66.44 % that matches the theoretical value. Infrared (IR) characterization shows several sharp peaks around 3500 cm⁻¹ indicating free stretch -OH group.

Gibbsite nano platelet is further treated with compound of formula (OR^{a})₃Si-R^{b} or of formula R^{c}-COOH wherein R^{a} is a C₁-C₁₀ alkyl radical; R^{b} is a C₅-C₃₀ hydrocarbon radical and R^{c} is a C₅-C₃₀ hydrocarbon radical; in order to achieve component B) of the catalyst system of the present disclosure. It is believed that the compounds of formula (OR^{a})₃Si-R^{b} or formula R^{b}-COOH react with at least some of the OH group present on the surface of the Gibbsite nano platelet to form a gibbsite nano platelet organophilic modified. The difference between the Gibbsite nano platelet and the gibbsite nano platelet organophilic modified can be seen by suspending in toluene the two material and treating them with treating the suspension with an ultrasonic bath. Gibbsite nano platelet organophilic modified dispersed uniformly and do not sediment while gibbsite nano platelet sediment immediately after the ultrasonic bath is switched off.

In the compound of formula (OR^{a})₃Si-R^{b}, R^{a} is a C₁-C₁₀ alkyl radical; R^{b} is a C₅-C₃₀ hydrocarbon radical; preferably R^{a} is a C₁-C₈ alkyl radical; more preferably R^{a} is a C₁-C₄ alkyl radical such as methyl, ethyl isopropyl n-propyl, tertbutyl, n-butyl,sec butyl, preferably R^{b} is a linear or branched C₅-C₃₀, alkyl, alkenyl, or alkynyl radical, preferably R^{b} is a C₁₀-C₂₀ linear or branched C₅-C₃₀, alkyl, alkenyl, or alkynyl radical, more preferably R^{b} is a C₁₀-C₂₀ linear alkyl, alkenyl, or alkynyl radical. Preferably the compound of formula (OR^{a})₃Si-R^{b} is trimethoxy (octadecyl) silane.

In the compound of formula R^{c}-COOH, R^{c} is a C₅-C₃₀ hydrocarbon radical; preferably R^{c} is a linear or branched C₅-C₃₀, alkyl, alkenyl, or alkynyl radical, preferably R^{c} is a C₁₀-C₂₀ linear or branched C₅-C₃₀, alkyl, alkenyl, or alkynyl radical, more preferably R^{c} is a C₁₀-C₂₀ linear alkyl, alkenyl, or alkynyl radical, such as fatty acids, for example stearic acid. Organometallic coordination compounds are compounds in which a central transition metal atom is coordinated with one or more organic compound and optionally one or more inorganic anions such as chloride or bromide. Examples of Organometallic coordination compounds can be metallocene, chromocene, late transition metal complexes of nickel and iron, widely known as catalysts.

Metallocene compounds are organometallic coordination compound consisting of a metal bonded to one or two cyclopentadienyl rings that can be substituted.

A preferred class of metallocene compounds belong to the following formulas (I), (II) or (III) 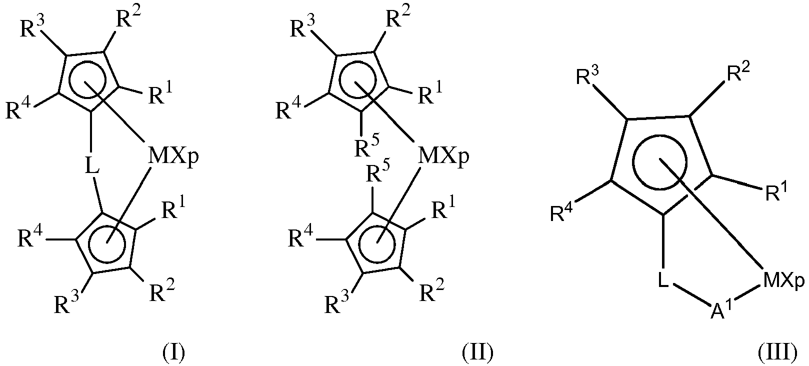 wherein
M is a transition metal belonging to group 4, 5 or to the lanthanide or actinide groups of the Periodic Table of the Elements; preferably M is zirconium, titanium or hafnium;
the substituents X, equal to or different from each other, are monoanionic sigma ligands selected from the group consisting of hydrogen, halogen, R⁶, OR⁶, OCOR⁶, SR⁶, NR⁶₂ and PR⁶₂, wherein R⁶ is a linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl group, optionally containing one or more Si or Ge atoms; the substituents X are preferably the same and are preferably R⁶, OR⁶ and NR⁶₂; wherein R⁶ is preferably a C₁-C₇ alkyl, C₆-C₁₄ aryl or C₇-C₁₄ arylalkyl group, optionally containing one or more Si or Ge atoms; more preferably, the substituents X are selected from the group consisting of -Cl, -Br, -Me, -Et, -n-Bu, -sec-Bu, -Ph, -Bz, -CH₂SiMe₃, -OEt, -OPr, -OBu, -OBz and -NMe₂; more preferably X is Cl or Me.
**p** is an integer equal to the oxidation state of the metal M minus 2;
L is a divalent bridging group selected from C₁-C₂₀ alkylidene, C₃-C₂₀ cycloalkylidene, C₆-C₂₀ arylidene, C₇-C₂₀ alkylarylidene, or C₇-C₂₀ arylalkylidene radicals optionally containing heteroatoms belonging to groups 13-17 of the Periodic Table of the Elements, and silylidene radical containing up to 5 silicon atoms such as SiMe₂, SiPh₂; preferably L preferably is a divalent group (ZR⁷ₘ)ₙ; Z being C, Si, Ge, N or P, and the R⁷ groups, equal to or different from each other, being hydrogen or linear or branched, saturated or unsaturated C₁-C₂₀ alkyl, C₃-C₂₀ cycloalkyl, C₆-C₂₀ aryl, C₇-C₂₀ alkylaryl or C₇-C₂₀ arylalkyl groups or two R¹ can form a aliphatic or aromatic C₄-C₇ ring;
**m** is 1 or 2, and more specifically it is 1 when Z is N or P, and it is 2 when Z is C, Si or Ge; **n** is an integer ranging from 1 to 4;
more preferably L is selected from Si(CH₃)₂, SiPh₂, SiPhMe, SiMe(SiMe₃), CH₂, (CH₂)₂, (CH₂)₃ or C(CH₃)₂;
R¹, R², R³, R⁴ and R⁵, equal to or different from each other, are hydrogen atoms, or linear or branched, saturated or unsaturated C₁-C₂₀-alkyl, C₃-C₂₀-cycloalkyl, C₆-C₂₀-aryl, C₇-C₂₀-alkylaryl, or C₇-C₂₀-arylalkyl radicals, optionally containing one or more heteroatoms belonging to groups 13-17 of the Periodic Table of the Elements; or two adjacent R¹, R², R³, R⁴ and R⁵ form one or more 3-7 membered ring optional containing heteroatoms belonging to groups 13-17 of the periodic table; such as to form with the cyclopentadienyl moiety the following radicals: indenyl; mono-, di-, tri- and tetra-methyl indenyl; 2-methyl indenyl, 3-^{t}butyl-indenyl, 2-isopropyli-4-phenyl indenyl, 2-methyl-4-phenyl indenyl, 2-methyl-4,5 benzo indenyl; 3-trimethylsilyl-indenyl; 4,5,6,7-tetrahydroindenyl; fluorenyl; 5,10-dihydroindeno[1,2-b]indol-10-yl; N-methyl- or N-phenyl-5,10-dihydroindeno [1,2-b]indol-10-yl; 5,6-dihydroindeno[2,1-b]indol-6-yl; N-methyl-or N-phenyl-5,6-dihydroindeno[2,1-b]indol-6-yl; azapentalene-4-yl; thiapentalene-4-yl; azapentalene-6-yl; thiapentalene-6-yl; mono-, di- and tri-methyl-azapentalene-4-yl, 2,5-dimethyl-cyclopenta[1,2-b:4,3-b']-dithiophene.

A¹ is a NR⁸ group or an oxygen or sulfur atom, wherein the group R⁸ is linear or branched, cyclic or acyclic, C₁-C₂₀-alkyl, C₂-C₂₀ alkenyl, C₂-C₂₀ alkynyl, C₆-C₂₀-aryl, C₇-C₂₀-alkylaryl or C₇-C₂₀-arylalkyl radicals, optionally containing heteroatoms belonging to groups 13 or 15-17 of the Periodic Table of the Elements; preferably A is a NR8 group wherein R⁸ is selected from the group consisting of methyl, ethyl, n-propyl, isopropyl, n-butyl, t-butyl, phenyl, p-n-butylphenyl, benzyl, cyclohexyl and cyclododecyl; more preferably R⁸ is t-butyl.

Suitable metallocene complexes belonging to formulas (I), (II) or (III) are described in WO 98/22486, WO 99/58539 WO 99/24446, USP 5,556,928, WO 96/22995, EP-485822, EP-485820, USP 5,324,800, EP-A-0 129 368, USP 5,145,819, EP-A-0 485 823, WO 01/47939, WO 01/44318, PCT/EP02/13552, EP-A-0 416 815, EP-A-0 420 436, EP-A-0 671 404, EP-A-0 643 066, WO-A-91/04257, EP 1858907 and EP 1692144.

Chromocene compounds are organometallic coordination compound consisting of a metal bonded to one or two cyclopentadienyl rings that can be substituted. When two cyclopentadienyl are present the Chromocene compounds are similar to the metallocene compounds of formula (i) and (II) wherein P is equal to 0, i.e. X is not present.

When only one cyclopentadienyl is present the chromocene compounds are preferably of formula (IV)

Cp-Zₖ-A-Cr, (IV)

where the variables have the following meanings:
Cp-Zₖ-A is 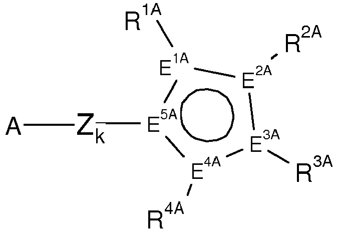 where the variables have the following meanings:
E^{1A}-E^{5A} are each carbon or not more than one E^{1A} to E^{5A} is phosphorus,
R^{1A}-R^{4A} are each, independently of one another, selected from the group consisting of hydrogen, C₁-C₂₂-alkyl, C₂-C₂₂-alkenyl, C₆-C₂₂-aryl, alkylaryl having from 1 to 10 carbon atoms in the alkyl radical and 6-20 carbon atoms in the aryl radical, NR^{5A}₂, N(SiR^{5A}a)₂, OR^{5A}, OSiR^{5A}₃, SiR^{5A}₃, BR^{5A}₂, wherein the organic radicals R^{1A}-R^{4A} may also be substituted by halogens, and further two vicinal radicals R^{1A}-R^{4A} may also be joined to form a five-, six- or seven-membered carbocyclic ring, and/or two vicinal radicals R^{1A}-R^{4A} may be joined to form a five-, six- or seven-membered heterocycle which contains at least one atom from the group consisting of N, P, O or S, wherein said carbocylce or heterocycle preferably form a condensed aromatic system with the cyclopentadienyl motiety and/or may be further substituted with hydrogen or, independently, radicals R^{5A}
And, independently from the afore said, preferably with the conditio that at least one R^{1A}-R^{4A} is an, preferably unfused or non-joined, arylalkyl having from 1 to 10 carbon atoms in the alkyl radical and 6-20 carbon atoms in the aryl radical, where the aryl may also be substituted by N-, P-, O- or S-containing substituents, C₁-C₂₂-alkyl, C₂-C₂₂-alkenyl, halogens or haloalkyls or haloaryls having 1 -10 carbon atoms,
the radicals R^{5A} are each, independently of one another, hydrogen, C₁-C₂₀-alkyl, C₂-C₂₀-alkenyl, C₆-C₂₀-aryl, alkylaryl having from 1 to 10 carbon atoms in the alkyl radical and 6-20 carbon atoms in the aryl radical and two geminal radicals R^{5A} may also be joined to form a five- or six-membered ring.

The bridge Z between the cyclopentadienyl system Cp and the uncharged donor A is preferably an organic divalent bridge (k=1), preferably consisting of carbon- and/or silicon- and/or boron-containing bridge members. Changing the length of the link between the cyclopentadienyl system and A enables the activity of the catalyst to be influenced.

A is an uncharged donor containing an atom of group 15 or 16 of the Periodic Table or a carbene, preferably one or more atoms selected from the group consisting of oxygen, sulfur, nitrogen and phosphorus, preferably nitrogen and phosphorus. The donor function in A can be bound intermo-lecularly or intramolecularly to the chromium. The donor in A is preferably bound intramolecularly to chromium. Possible donors are uncharged functional groups containing an element of group 15 or 16 of the Periodic Table, e.g. amine, imine, carboxamide, carboxylic ester, ketone (oxo), ether, thioketone, phosphine, phosphite, phosphine oxide, sulfonyl, sulfonamide, carbenes such as N-substituted imidazol-2-ylidene or unsubstituted, substituted or fused, heterocyclic ring systems. The synthesis of the bond from A to the cyclopentadienyl radical and Z can be carried out, for example, by a method analogous to that of WO 00/35928.

A is preferably a heteroaromatic system, preferably an unsubstituted, substituted and/or fused six-membered heteroaromatic having 1, 2, 3, 4 or 5 nitrogen atoms in the heteroaromatic part, in particular substituted and unsubstituted 2-pyridyl, 2-quinolyl or 8-quinolyl.

In preferred cyclopentadienyl systems Cp, all E^{1A} to E^{5A} are carbon.

One of the substituents R^{1A}-R^{4A} is always an alkylaryl having from 1 to 10 carbon atoms in the alkyl radical and 6-20 carbon atoms in the aryl radical in order to achieve the desired results. The remaining substituents can be varied widely and possible carboorganic substituents R^{1A}-R^{4A} are, for example, the following; C₁-C₂₂-alkyl which may be linear or branched, e.g. methyl, ethyl, n-propyl, isopropyl, n-butyl, isobutyl, tert-butyl, n-pentyl, n-hexyl, n-heptyl, n-octyl, n-nonyl, n-decyl or n-dodecyl, 5- to 7-membered cycloalkyl which may in turn bear a C₁-C₁₀-alkyl group and/or a C₆-C₁₀-aryl group as substituent, e.g. cyclopropane, cyclobutane cyclopentane, cyclohexane, cycloheptane, cyclooctane, cyclononane or cyclododecane, C₂-C₂₂-alkenyl which may be linear, cyclic or branched and in which the double bond can be internal or terminal, e.g. vinyl, 1-allyl, 2-allyl, 3-allyl, butenyl, pentenyl, hexenyl, cyclopentenyl, cyclohexenyl, cyclooctenyl or cyclooctadienyl, C₆-C₂₂-aryl which may be substituted by further alkyl groups, e.g. phenyl, naphthyl, biphenyl, anthranyl, o-, m-, p-methylphenyl, 2,3-, 2,4-, 2,5-, or 2,6-dimethylphenyl, 2,3,4-, 2,3,5-, 2,3,6-, 2,4,5-, 2,4,6- or 3,4,5-trimethylphenyl, or arylalkyl which may be substituted by further alkyl groups, e.g. benzyl, o-, m-, p-methylbenzyl, 1- or 2-ethylphenyl, where two of the radicals R^{1A} to R^{4A} may also be joined to form a 5-, 6- or 7-membered ring and/or two of the vicinal radicals R^{1A}-R^{4A} may be joined to form a five-, six- or seven-membered heterocycle which contains at least one atom from the group consisting of N, P, O or S and/or the organic radicals R^{1A}-R^{4A} may also be substituted by halogens such as fluorine, chlorine or bromine.

Furthermore, R^{1A}-R^{4A} can also be amino NR^{5A}₂, or N(SiR^{5A}₃)₂, alkoxy or aryloxy OR^{5A}, for example dimethylamino, N-pyrrolidinyl, picolinyl, methoxy, ethoxy or isopropoxy. In organosilicon substituents SiR^{5A}₃, the radicals R^{5A} can be the same carboorganic radicals as described in more detail above for R^{1A}-R^{4A}, where two R^{5A} may also be joined to form a 5- or 6-membered ring, e.g. trimethylsilyl, triethylsilyl, butyldimethylsilyl, tributylsilyl, tri-tert-butylsilyl, triallylsilyl, triphenylsilyl or dimethylphenylsilyl.

These SiR^{5A}₃ radicals can also be bound to the cyclopentadienyl skeleton via an oxygen or nitrogen, for example trimethylsilyloxy, triethylsilyloxy, butyldimethylsilyloxy, tributylsilyloxy or tri-tert-butylsilyloxy. Preferred radicals R^{1A}-R^{4A} are hydrogen, methyl, ethyl, n-propyl, isopropyl, n-butyl, isobutyl, tert-butyl, n-pentyl, n-hexyl, n-heptyl, n-octyl, vinyl, allyl, benzyl, phenyl, ortho-dialkyl- or -dichloro-substituted phenyls, trialkyl- or trichloro-substituted phenyls, naphthyl, biphenyl and anthranyl. Particularly useful organosilicon substituents are trialkylsilyl groups having from 1 to 10 carbon atoms in the alkyl radical, in particular trimethylsilyl groups.

Two vicinal radicals R^{1A}-R^{4A} together with the atoms E^{1A} -E^{5A} bearing them can form a heterocycle, preferably a heteroaromatic, which contains at least one atom from the group consisting of nitrogen, phosphorus, oxygen and sulfur, particularly preferably nitrogen and/or sulfur, with preference being given to the atoms E^{1A}-E^{5A} present in the heterocycle or heteroaromatic being carbon.

Preference is given to heterocycles and heteroaromatics having a ring size of 5 or 6 ring atoms. Examples of 5-membered heterocycles which have from one to four nitrogen atoms and/or a sulfur or oxygen atom in addition to carbon atoms as ring members are 1,2-dihydrofuran, furan, thiophene, pyrrole, isoxazole, 3-isothiazole, pyrazole, oxazole, thiazole, imidazole, 1,2,4-oxadiazole, 1,2,5-oxadiazole, 1,3,4-oxadiazole, 1,2,3-triazole and 1,2,4-triazole. Examples of 6-membered heteroaryl groups which may contain from one to four nitrogen atoms and/or a phosphorus atom are pyridine, phosphobenzene, pyridazine, pyrimidine, pyrazine, 1,3,5-triazine, 1,2,4-triazine or 1,2,3-triazine.

The 5-membered and 6-membered heterocycles can also be substituted by C₁-C₁₀-alkyl, C₆-C₁₀-aryl, alkylaryl having from 1 to 10 carbon atoms in the alkyl radical and 6-10 carbon atoms in the aryl radical, trialkylsilyl or halogens such as fluorine, chlorine or bromine, dialkylamide, alkylarylamide, diarylamide, alkoxy or aryloxy or be fused with one or more aromatics or heteroaromatics. Examples of benzo-fused 5-membered heteroaryl groups are indole, indazole, benzofuran, benzothiophene, benzothiazole, benzoxazole and benzimidazole. Examples of benzo-fused 6-membered heteroaryl groups are chromane, benzopyran, quinoline, isoquinoline, cinnoline, phthalazine, quinazoline, quinoxaline, 1,10- phenanthroline and quinolizine.

Naming and numbering of the heterocycles has been taken from Lettau, Chemie der Heterocyclen, 1st edition, VEB, Weinheim 1979. The heterocycles/heteroaromatics are preferably fused with the cyclopentadienyl skeleton via a C-C double bond of the heterocycle/heteroaromatic. Heterocycles/heteroaromatics having one heteroatom are preferably 2,3- or b-fused.

Cyclopentadienyl systems Cp having a fused heterocycle are, for example, thiapentalene, methylthiapentalene, ethylthiapentalene, isopropylthiapentalene, n-butylthiapentalene, tert-butylthiapentalene, trimethylsilylthiapentalene, phenylthiapentalene, naphthylthia-pentalene, methylthiopentalene, azapentalene, methylazapentalene, ethylazapentalene, isopropylazapentalene, n-butylazapentalene, trimethylsilylazapentalene, phenylazapentalene, naphthylazapentalene, oxapentalene or phosphapentalene.

The synthesis of such cyclopentadienyl systems having a fused-on heterocycle is described, for example, in the abovementioned WO 98/22486. In "metalorganic catalysts for synthesis and polymerisation" , Springer Verlag 1999, Ewen et al., p.150 ff, describe further syntheses of these cyclopentadienyl systems.

Particularly preferred substituents R^{1A}-R^{4A} are the above-described carboorganic substituents and the carboorganic substituents which form a cyclic fused ring system, i.e. together with the E^{1A}-E^{5A} skeleton, preferably together with a cyclopentadienyl skeleton, form, for example, an unsubstituted or substituted indenyl, indacenyl, benzindenyl, phenanthrenyl or tetrahydroindenyl system, and in particular their preferred embodiments.

Examples of such cyclopentadienyl systems (without the group -Z-A-, which is preferably located in the 1 position, and without the arylalkyl substituents) are monoalkylcyclopentadienyl systems, e.g. 3-methylcyclopentadienyl, 3-ethylcyclopentadienyl, 3-isopropylcyclopentadienyl, 3-tert-butylcyclopentadienyl, dialkylcyclopentadienyl systems, e.g. tetrahydroindenyl, 2,4-dimethylcyclopentadienyl or 3-methyl-5-tert-butylcyclopentadienyl, or trialkylcyclopentadienyl systems, e.g. 2,3,5-trimethylcyclopentadienyl, and also indenyl, indacenyl or benzoindenyl.

The fused ring system may bear further C₁-C₂₀-alkyl, C₂-C₂₀-alkenyl, C₆-C₂₀-aryl, alkylaryl having from 1 to 10 carbon atoms in the alkyl radical and 6-20 carbon atoms in the aryl radical, NR^{5A}₂, N(SiR^{5A}₃)₂, OR^{5A}, OSiR^{5A}₃ or SiR^{5A}₃ substituents, e.g. 4-methylindenyl, 4-ethylindenyl, 4-isopropylindenyl, 5-methylindenyl, 4-phenylindenyl, 5-methyl-4-phenylindenyl or 4-naphthylindenyl.

Cocatalyst used as component c) in the catalyst system according to the present invention can be Alumoxane obtained for example by reacting water with an organo-aluminium compound of formula HⱼAlU₃₋ⱼ or HⱼAl₂U₆₋ⱼ, where the U substituents, same or different, are hydrogen atoms, halogen atoms, C₁-C₂₀-alkyl, C₃-C₂₀-cyclalkyl, C₆-C₂₀-aryl, C₇-C₂₀-alkylaryl or C₇-C₂₀-arylalkyl radicals, optionally containing silicon or germanium atoms, with the proviso that at least one U is different from halogen, and j ranges from 0 to 1, being also a non-integer number. In this reaction the molar ratio of Al/water is preferably comprised between 1:1 and 100:1.

The alumoxanes used in the catalyst system according to the invention are considered to be linear, branched or cyclic compounds containing at least one group of the type: 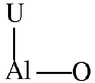 wherein the substituents U, same or different, are defined above.
In particular, alumoxanes of the formula: 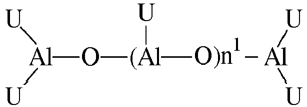 can be used in the case of linear compounds, wherein n¹ is 0 or an integer of from 1 to 40 and the substituents U are defined as above; or alumoxanes of the formula: 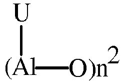 can be used in the case of cyclic compounds, wherein n² is an integer from 2 to 40 and the U substituents are defined as above.

Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Particularly interesting cocatalysts are those described in WO 99/21899 and in WO01/21674 in which the alkyl and aryl groups have specific branched patterns.

Examples of aluminium compounds that can be reacted with water to give suitable alumoxanes (b), described in WO 99/21899 and WO01/21674, are: tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methylbutyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethylpentyl)aluminium, tris(2-isopropyl-3,3-dimethyl-butyl)aluminium, tris(2-trimethylsilyl-propyl)aluminium, tris(2-methyl-3-phenyl-butyl)aluminium, tris(2-ethyl-3-phenyl-butyl)aluminium, tris(2,3-dimethyl-3-phenyl-butyl)aluminium, tris(2-phenyl-propyl)aluminium, tris[2-(4-fluorophenyl)-propyl]aluminium, tris[2-(4-chloro-phenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris [2- (pentafluorophenyl) -propyl] aluminium, tris [2,2-diphenylethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBA), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

The cocatalyst component C) can also be compounds able to form an alkylmetallocene cation. Examples of these compounds are compounds of formula D⁺E⁻, wherein D⁺ is a Brønsted acid, able to donate a proton and to react irreversibly with a substituent X of the metallocene of formula (I) and E⁻ is a compatible anion, which is able to stabilize the active catalytic species originating from the reaction of the two compounds, and which is sufficiently labile to be removed by an olefinic monomer. Preferably, the anion E⁻ comprises one or more boron atoms. More preferably, the anion E⁻ is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred compound, as described in WO 91/02012.

Moreover, compounds of formula BArs can be conveniently used. Compounds of this type are described, for example, in the International patent application WO 92/00333. Other examples of compounds able to form an alkylmetallocene cation are compounds of formula BAr₃P wherein P is a substituted or unsubstituted pyrrol radical.

These compounds are described in WO01/62764. Compounds containing boron atoms can be conveniently supported according to the description of DE-A-19962814 and DE-A-19962910. All these compounds containing boron atoms can be used in a molar ratio between boron and the metal of the metallocene or chromocene comprised between about 1:1 and about 10:1; preferably 1:1 and 2.1; more preferably about 1:1.

The supported catalyst system of the present invention can be obtained by contacting components A) B) and C) in any order. Particularly preferred process is to contact component A) with component C) and then to add component B)

A further object of the present invention is a process for polymerizing alpha olefins comprising contacting under polymerization conditions alpha olefins and the supported catalyst system of the present disclosure.

The supported catalyst system of the present invention can be used for the polymerization of olefins in particular alpha olefins in high yields. In particular it can be used for the polymerization of ethylene or for the copolymerization of ethylene with one or more alphaolefins of formula CH₂=CHT wherein T is a C₁-C₁₀ alkyl radical. Examples of alphaolefins of formula CH₂=CHT are: propylene, 1-butene, 1-hexene, 1-octene and 4-methyl-1-pentene, preferred alpha olefins are propylene, 1-butene, 1-hexene and 1-octene.

The following examples are given to illustrate the present invention.

### EXAMPLES

### Component B1)

### Synthesis of gibbsite nano platelet

Gibbsite nano platelet (γ-A1(OPH)₃) is synthesized from Al(NO₃)₃·9H₂O as precursor after hydrothermal crystallization. The preparation procedure is described in **Schema 1.**

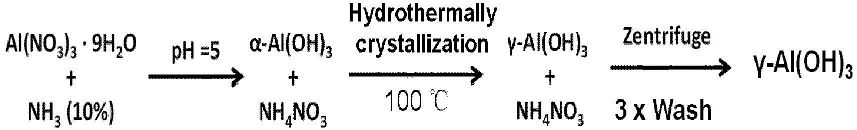

Typically, 96.23 g Al(NO₃)₃·9H₂O is dissolved in 1923 g deionized water. Then, dropwise ammonia in a solution at 10 wt.-% in water is added to adjust the PH to 5 at room temperature with a vigorous stirring to form a homogenous white gel-like solution. The homogenous white gel-like solution is treated in oven at 100°C for 10 days. The super natant liquid is removed and the sedimentation is centrifuged at 7500 rpm for 30 minutes and washed 3 times with deionized water to purify the product 20 g of wet gibbsite is obtained. The gibbsite obtained has to be stored in a wet state.

### Component B2)

### Synthesis of organophilic nano platelet gibbsite

The wet state gibbsite (ca. 20g) is dispersed in 300 ml of a mixture of deionized water and Ethanol containing 75 ml deionized water and 225 ml of ethanol in a 500 ml two necked flask. The mixture is treated with ultrasonic bath at room temperature for 30 min. Then 5 ml (of a 20 wt.-% solution of trimethoxy (octadecyl) silane is added and the suspension is heated at 75°C for 12 h with stirring (500 rpm). After 12 h the suspension is cooled and the supernatant liquid is removed. The sediment is further purified by centrifuge with a rate of 7500 rpm for 20 min and washed 2 times with EtOH. The organophilic gibbsite so obtained is dried.

### Example 1

### Component A)

### Component A) used is a well-known chromocene of formula

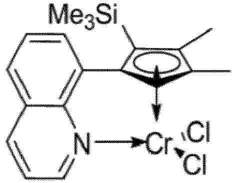

### Catalyst system

250 mg of component B2) was dried overnight under vacuum at 100°C. Then it was dispersed in 5ml toluene by putting it for 30min in an ultrasonic bath. 0.77ml of methylalumoxane (MAO 30 wt % in Toluene) was added and stirred for 5min. The powder was left to settle the supernatant toluene was removed. The obtained powder was washed twice with toluene with separation by decantation. A solution of 0.5 mg of the chromium complex component A) in toluene was added to the support, the suspension was stirred for 5 min and decanted. The supernatant liquid is removed and the power was suspended 20 ml of heptane:

### Ethylene polymerization

The catalyst system obtained above was added to the polymerization reactor containing already 580 ml Heptane and 3 ml of 1 molar tri-isobutyl aluminum in Heptane. Ethylene (5 bar) was added at 40°C under stirring. Polymerization was allowed to proceed at a pressure of 5bar for 2 hours. Then the reactor was depressurized: and methanol was added. The recovered polymer was filtered and dried overnight. The activity of the catalyst system was 160 000 kgpol/molCr/h

### Comparative example 2

The Catalyst system has been prepared as above described with the difference that the gibbsite nano platelet obtained component B1 obtained as above described has been used instead that the organophilic nano platelet gibbsite component B2. The polymerization has been carried out according to the above procedure. The activity of the catalyst system was 40 000 kgpol/molCr/h.

### Component A1)

2-((1-(trimethylsilyl)-indenyl)-methyl)pyridin-CrCl2 (as described in WO 2011/089017).

### Component A2)

Bis(n-butyl-cyclopentadienyl)hafnium dichloride from Chemtura Inc.

### Comparative Example 3

### Catalyst system 3

250 mg of component B1) was dried overnight under vacuum at 100°C. Then it was dispersed in 20ml toluene by putting it for 30min in an ultrasonic bath. 0.85ml of methylalumoxane (MAO 30 wt % in Toluene, from Chemtura Inc) was added and stirred for 30min. The powder was left to settle the supernatant toluene was removed. The obtained powder was washed twice with 20ml toluene and then twice with 20ml of heptane with separation by decantation. A solution of 4.3 mg Component A1) and 3.5mg of the chromium complex component A2) in in 2ml toluene was added to the support, the suspension was stirred for one hour. The supernatant liquid was decantated and the powder was resuspended in 20 ml of heptane: 20 ml solution with ~70 µmol/g active components

### Example 4

### Catalyst system 4

250 mg of component B2) was dried overnight under vacuum at 100°C. Then it was dispersed in 20ml toluene by putting it for 30min in an ultrasonic bath. 0.85ml of methylalumoxane (MAO 30 wt % in Toluene, from Chemtura Inc) was added and stirred for 30min. The powder was left to settle the supernatant toluene was removed. The obtained powder was washed twice with 20ml toluene and then twice with 20ml of heptane with separation by decantation. A solution of 4.4 mg Component A1) and 3.4mg of the chromium complex component A2) in in 2ml toluene was added to the support, the suspension was stirred for one hour. The supernatant liquid was decantated and the powder was resuspended in 20 ml of heptane: 20 ml solution with ~70 µmol/g active components.

### Comparative Example 5

### Catalyst system 5

Catalyst system 4 was repeated with silica support Sylopol XPO2326 from Grace instead of component B2).

### Polymerization

400ml isobutane were loaded in a 11 autoclave under nitrogen. The reactor was flashed twice by 2bar ethylene to remove the nitrogen. The reactor was pressurized to 30 Bar with ethylene. 1ml (corresponding to 12,5mg of support) was added to the reactor through a feeding valve. The reaction was carried out under stirring for one hour at 65°C. The results are summarized in table 1.

**Table 1**

| Catalyst System | Catalyst system | Mileage | density (I.R.) |
|---|---|---|---|
| | [mg] | [gPE/g support) | [g/cm³] |
| 3 | 12,5 | 6500 | 0,9233 |
| 4 | 12,5 | 10000 | 0,9256 |
| 5 | 12,5 | 3500 | 0,9320 |

From table 1 is clear that the catalyst system according to the present invention shows a higher activity with respect to the catalysts of the comparative examples.

## Claims

1. A supported catalyst system comprising:
A) at least one organometallic coordination compound consisting of a metal bonded to one or two cyclopentadienyl rings that can be substituted;
B) a nano platelet gibbsite treated with compound of formula (OR^{a})₃Si-R^{b} or of formula R^{c}-COOH wherein R^{a} equal to or different from each other is a C₁-C₁₀ alkyl radical; R^{b} is a C₅-C₃₀ hydrocarbon radical and R^{c} is a C₅-C₃₀ hydrocarbon radical; and
C) a cocatalyst.

2. The supported catalyst system according to claim 1 wherein in component B) in the compound of formula (OR^{a})₃Si-R^{b}, R^{a} is a C₁-C₈ alkyl radical.

3. The supported catalyst system according to claims 1 or 2 wherein in component B) in the compound of formula (OR^{a})₃Si-R^{b}, R^{a} is a C₁-C₄ alkyl radical.

4. The supported catalyst system according to anyone of claims 1-3 wherein in component B) in the compound of formula (OR^{a})₃Si-R^{b}, R^{b} is a C₁₀-C₂₀ linear alkyl, alkenyl, or alkynyl radical.

5. The supported catalyst system according to anyone of claims 1-4 wherein in component B) the compound of formula (OR^{a})₃Si-R^{b}is trimethoxy (octadecyl) silane.

6. The supported catalyst system according to claim 1 wherein in the compound of formula R^{c}-COOH, R^{c} is a linear or branched C₅-C₃₀, alkyl, alkenyl, or alkynyl radical.

7. The supported catalyst system according to claim 6 wherein in the compound of formula R^{c}-COOH, R^{c} is a C₁₀-C₂₀ linear alkyl, alkenyl, or alkynyl radical.

8. The supported catalyst system according to claim 7 wherein the compound of formula R^{c}-COOH is a fatty acid.

9. The supported catalyst system according to anyone of claims 1-8 wherein component A) is a chromocene compound.

10. The supported catalyst system according to anyone of claims 1-9 wherein component A) is a mixture of a chromocene compound and a metallocene compound.

11. The supported catalyst system according to anyone of claims 1-10 wherein component C is an alumoxane.

12. The process for polymerizing alpha olefins comprising contacting under polymerization conditions alpha olefins and the supported catalyst system of claims 1-11.

## Patentansprüche

1. Geträgertes Katalysatorsystem, umfassend:
A) mindestens eine organometallische Koordinationsverbindung, bestehend aus einem Metall, das an einen oder zwei Cyclopentadienylringe gebunden ist, die substituiert sein können;
B) ein Nanoplättchen-Gibbsit, das mit einer Verbindung der Formel (OR^{a})₃Si-R^{b} oder der Formel R^{c}-COOH behandelt ist, wobei R^{a}, das gleich oder voneinander verschieden ist, ein C₁-C₁₀-Alkylrest ist; R^{b} ein C₅-C₃₀-Kohlenwasserstoffrest ist, und R^{c} ein C₅-C₃₀-Kohlenwasserstoffrest ist; und
C) einen Cokatalysator.

2. Geträgertes Katalysatorsystem nach Anspruch 1, wobei R^{a} in Komponente B) in der Verbindung mit der Formel (OR^{a})₃Si-R^{b} ein C₁-C₈-Alkylrest ist.

3. Geträgertes Katalysatorsystem nach den Ansprüchen 1 oder 2, wobei R^{a} in Komponente B) in der Verbindung mit der Formel (OR^{a})₃Si-R^{b} ein C₁-C₄-Alkylrest ist.

4. Geträgertes Katalysatorsystem nach einem der Ansprüche 1 bis 3, wobei R^{b} in Komponente B) in der Verbindung mit der Formel (OR^{a})₃Si-R^{b} ein linearer C₁₀-C₂₀-Alkyl-, -Alkenyl- oder -Alkinylrest ist.

5. Geträgertes Katalysatorsystem nach einem der Ansprüche 1 bis 4, wobei die Verbindung der Formel (OR^{a})₃Si-R^{b} in Komponente B) Trimethoxy(octadecyl)silan ist.

6. Geträgertes Katalysatorsystem nach Anspruch 1, wobei R^{c} in der Verbindung der Formel R^{c}-COOH ein linearer oder verzweigter C₅-C₃₀-Alkyl-, -Alkenyl- oder -Alkinylrest ist.

7. Geträgertes Katalysatorsystem nach Anspruch 6, wobei R^{c} in der Verbindung der Formel R^{c}-COOH ein linearer C₁₀-C₂₀-Alkyl-, -Alkenyl- oder -Alkinylrest ist.

8. Geträgertes Katalysatorsystem nach Anspruch 7, wobei die Verbindung der Formel R^{c}-COOH eine Fettsäure ist.

9. Geträgertes Katalysatorsystem nach einem der Ansprüche 1 bis 8, wobei Komponente A) eine Chromocenverbindung ist.

10. Geträgertes Katalysatorsystem nach einem der Ansprüche 1 bis 9, wobei Komponente A) eine Mischung aus einer Chromocenverbindung und einer Metallocenverbindung ist.

11. Geträgertes Katalysatorsystem nach einem der Ansprüche 1 bis 10, wobei Komponente C) ein Alumoxan ist.

12. Verfahren zum Polymerisieren von alpha-Olefinen, umfassend Kontaktieren von alpha-Olefinen und dem geträgerten Katalysatorsystem nach den Ansprüchen 1 bis 11 unter Polymerisationsbedingungen.

## Revendications

1. Système catalytique supporté comprenant :
A) au moins un composé de coordination organométallique constitué d'un métal lié à un ou deux cycles cyclopentadiényle qui peuvent être substitués ;
B) une gibbsite en nanoplaquettes traitée par un composé de formule (OR^{a})₃Si-R^{b} ou de formule R^{c}-COOH dans lesquelles les radicaux R^{a}, égaux ou différents les uns des autres, représentent un radical alkyle en C₁-C₁₀ ; R^{b} représente un radical hydrocarboné en C₅-C₃₀ et R^{c} représente un radical hydrocarboné en C₅-C₃₀ ; et
C) un cocatalyseur.

2. Système catalytique supporté selon la revendication 1, dans lequel, dans le constituant B), dans le composé de formule (OR^{a})₃Si-R^{b}, les radicaux R^{a} représentent un radical alkyle en Ci-Cs.

3. Système catalytique supporté selon les revendications 1 ou 2, dans lequel, dans le constituant B), dans le composé de formule (OR^{a})₃Si-R^{b}, les radicaux R^{a} représentent un radical alkyle en C₁-C₄.

4. Système catalytique supporté selon l'une quelconque des revendications 1 à 3, dans lequel, dans le constituant B), dans le composé de formule (OR^{a})₃Si-R^{b}, R^{b} représente un radical alkyle, alcényle ou alcynyle linéaire en C₁₀-C₂₀.

5. Système catalytique supporté selon l'une quelconque des revendications 1 à 4, dans lequel, dans le constituant B), le composé de formule (OR^{a})₃Si-R^{b} est le triméthoxy(octadécyl)silane.

6. Système catalytique supporté selon la revendication 1, dans lequel, dans le composé de formule R^{c}-COOH, R^{c} représente un radical alkyle, alcényle ou alcynyle linéaire ou ramifié en C₅-C₃₀.

7. Système catalytique supporté selon la revendication 6, dans lequel, dans le composé de formule R^{c}-COOH, R^{c} représente un radical alkyle, alcényle ou alcynyle linéaire en C₁₀-C₂₀.

8. Système catalytique supporté selon la revendication 7, dans lequel le composé de formule R^{c}-COOH est un acide gras.

9. Système catalytique supporté selon l'une quelconque des revendications 1 à 8, dans lequel le constituant A) est un composé chromocène.

10. Système catalytique supporté selon l'une quelconque des revendications 1 à 9, dans lequel le constituant A) est un mélange d'un composé chromocène et d'un composé métallocène.

11. Système catalytique supporté selon l'une quelconque des revendications 1 à 10, dans lequel le constituant C est un aluminoxane.

12. Procédé de polymérisation d'alpha-oléfines, comprenant la mise en contact, dans des conditions de polymérisation, d'alpha-oléfines et du système catalytique supporté selon les revendications 1 à 11.
